# EUROPEAN PATENT SPECIFICATION

(11) **EP 0 923 031 B1**
(45) Date of publication and mention of the grant of the patent: **13.11.2002**
(21) Application number: 97830657.9
(22) Date of filing: 11.12.1997
(51) Int. Cl.: G06F 12/08

(54) **Method for reading data from a shared memory in a multiprocessor computer system**
Verfahren zum Lesen von Daten auf einem gemeinsamen Speicher in einem Multiprozessor-Rechnersystem
Procédé de lecture de données d'une mémoire dans une système d'ordinateur multiprocesseur

(43) Date of publication of application: 16.06.1999
(73) Proprietor: BULL S.A., 78434 Louveciennes Cedex (FR)
(72) Inventor: Zanzottera, Daniele, 20020 Busto Garolfo (Milano) (IT); Savogin, Lucio, 22100 Como (IT)
(74) Representative: Pezzoli, Ennio

(56) References cited:
- EP-A- 0 379 771
- EP-A- 0 608 638
- EP-A- 0 738 977
- EP-A- 0 777 184

## Description

The present invention relates to a method for reading data from a shared memory in a multiprocessor computer system, and particularly to a method according to the precharacterizing clause of the first claim.

Multiprocessor computer systems, in which a plurality of processors execute different operations simultaneously using a shared memory, are widely used to obtain high operating performance; typically, the processors and the shared memory are connected in parallel to a multi-point communication channel, or bus, for the transfer of data, addresses and instructions.

In general, each processor includes a buffer memory (cache), which is very fast but has a limited capacity, and which stores data corresponding to those stored in the (relatively slow) shared memory, in such a way as to reduce statistically the number of accesses to the shared memory (and therefore also to the computer system bus).

When a processor requests the reading of a data element from the shared memory, this processor sends the address of the requested data to the bus. To ensure the consistency of the data of the shared memory replicated in the cache memories, the processors continuously observe (by a process known as snooping) the read requests, to check whether the requested data element is present in their cache memory. If the requested data element is present in a processor in a form which has changed from the (no longer valid) value present in the shared memory, this processor intervenes by directly supplying the data element to the requesting processor.

Simultaneously, the requested data element is read in parallel from the shared memory, without awaiting the result of the snooping process. This makes it possible to obtain the requested data element from the shared memory more rapidly if this data element is not present in a modified form in the cache memory of any processor (other than the requesting processor).

The inventors have realized that the known reading method described above does not allow the resources of the computer system to be exploited in an optimal way. In particular, this method requires in each case the reading of the requested data element from the shared memory; this operation is executed even when the data read from the shared memory is not used, for example because the requested data element is supplied by the intervening processor. Since the reading of the requested data element from the shared memory requires a period of time generally greater than that necessary for the execution of the snooping process, the shared memory is occupied unnecessarily; this reduces the operating speed of the shared memory and thus has a negative effect on the performance of the whole computer system.

The object of the present invention is to overcome the above problems. To achieve this object a method for reading data as described in the first claim is proposed.

From documents EP-A-0 738 977 and EP-A-0 379 771 memory reading procedures are known, wherein the reading of a data element is inhibited when it is determined that the requested state element is present in a modified form in the cache memory.

Further characteristics and the advantages of the method for reading data according to the present invention will be made clear by the following description of a preferred embodiment thereof, provided for information only and without restriction, with reference to the attached figures, in which:
Fig. 1 is a block diagram of a computer system in which the method according to the present invention can be used;
Fig. 2 represents in schematic form the structure of the control unit shown in Fig. 1;
Fig. 3 illustrates in a timing diagram a known method for reading data from the shared memory in the computer system shown in Fig. 1;
Fig. 4 represents in a timing diagram an example of the method for reading data according to the present invention.

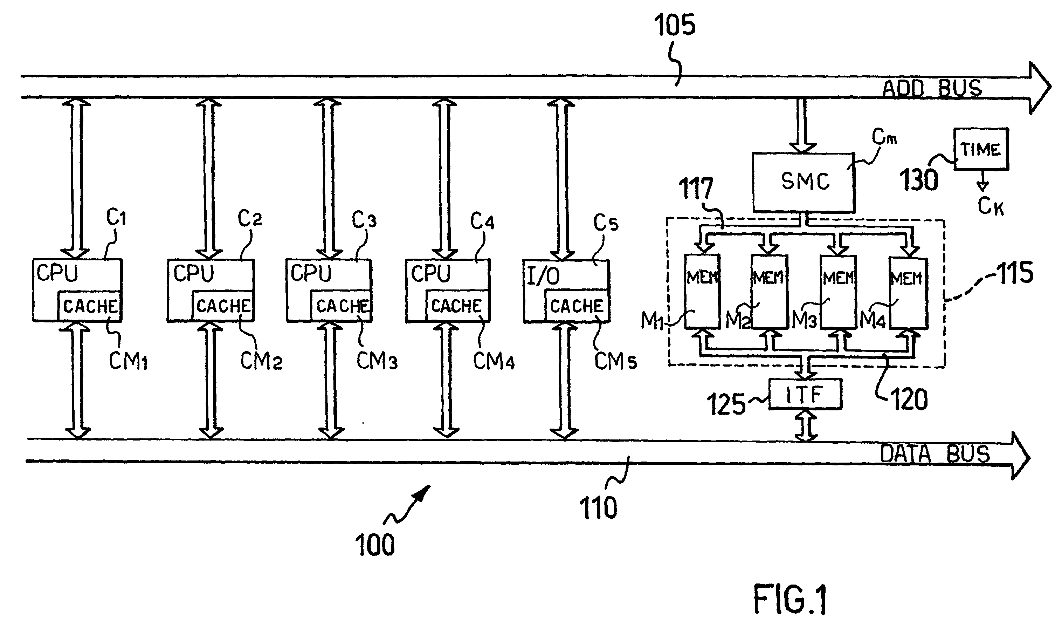

With reference to Fig. 1 in particular, a multiprocessor computer system 100 is illustrated, comprising an address bus (ADD BUS) 105 and a data bus (DATA BUS) 110, both, for example, of the 64-bit type. A data element transmitted along the bus 110 generally consists of a 512-bit (64-byte) cache memory line, and therefore it is transmitted along the data bus 110 by serializing the operation into a plurality of successive stages (8 in the example in question) during each of which a block of 64 bits is transmitted.

A plurality of processors C1, C2, C3, C4 and C5 (five in the example shown) are connected in parallel to the address bus 105 and to the data bus 110, and operate in what is known as "master" mode with the function of controlling access (with reciprocal exclusion) to the address bus 105 and to the data bus 110; typically, the processors C1-C5 consist of central processing units (CPU), or alternatively input/output (I/O) controllers, interface units (bridges) for connection to a group (cluster) of processors, and similar. Each processor C1, C2, C3, C4 and C5 (or only one or more of them) is provided with a cache memory, identified as CM1, CM2, CM3, CM4 and CM5 respectively.

The computer system 100 also includes a shared central memory 115, typically of the dynamic random access (DRAM) type, comprising a plurality of banks (MEM) M1, M2, M3 and M4 (four in the example shown). Each addressable location (entry) of the shared memory 115 contains one word, processed simultaneously and consisting for example of 256 bits (32 bytes); the reading of a data element, consisting of a 64-byte cache memory line in the example in question, therefore requires the sequential reading of two consecutive locations of the shared memory 115.

It should be noted that successive operations of reading from the same memory bank M1-M4 must be separated from each other by a minimum time interval, which defines a memory cycle (of the order of 120 ns) and is equal to the time interval between a read instruction and the availability of the data (access time), plus a further time interval (of the order of 30 ns) which enables the correct operation of the shared memory 115 to be restored (pre-load time). Preferably, the memory banks M1-M4 have a common input and output for the data and each of them is associated with a corresponding internal address staticizing register (not shown in the figure); the memory banks M1-M4 are controlled in interleaving mode so that it is possible to initiate an operation on one bank as soon as the access to another bank has terminated, without waiting for the corresponding pre-load time.

The shared memory 115 is connected to the address bus 105 through a memory control unit (System Memory Control, or SMC) Cm; the connection between the control unit Cm and the shared memory 115 is made through a memory address bus (MEM ADR BUS) 117 (of the 14-bit type, for example). A memory data bus (MEM DATA BUS) 120 connects the shared memory 115 to an interface unit (ITF) 125; the memory data bus 120 has, for example, a capacity of 128 bits (16 bytes), and therefore the transmission of a 32-byte word is serialized into two successive stages. The interface unit 125 is connected to the system data bus 110 and typically carries out the function of staticizing the data (for their subsequent transmission along the system data bus 110), of error recognition (and possibly correction), and similar.

A value (ADD) indicating an address (DAdr) of a data element (of the shared memory, of an internal register of a processor, of a remote memory of a cluster of processors, and similar) and the type of operation (DOp) requested (reading, writing, reading with the intention of modifying the data, and similar) is transmitted along the address bus 105; typically, the data are not controlled in an ordered flow and may be supplied to a requesting processor in any sequence (Out of Order); consequently the ADD value also includes a tag (DTag) which identifies the requesting processor and the transaction relating to it.

The processors C1-C5 and the control unit Cm are connected simultaneously to the address bus 105 to receive the value transmitted along it; the access of the processors C1-C5 with reciprocal exclusion to the address bus 105 for sending a particular value is controlled by a suitable arbitration unit, preferably provided within the control unit Cm. Similarly, each processor C1-C5 and the interface unit 125 are connected simultaneously to the data bus 110 to receive the value transmitted along it, while the access with reciprocal exclusion to the data bus 110 for sending a particular value is controlled by the arbitration unit provided in the control unit Cm. Access to the memory address bus 117 and to the memory data bus 120 is controlled directly by the control unit Cm.

A timer unit (TIME) 130 generates a clock signal Ck, at a frequency of 100 MHz and therefore a period of 10 ns for example, which is supplied to the processors C1-C5, to the control unit Cm, to the shared memory 115 and to the interface unit 125 to synchronize the operation of the computer system 100. The control of the address bus 105 is synchronous, and consequently the occupation of the address bus 105 by a processor C1-C5 has a fixed duration (2 clock periods, for example); on the other hand, the duration of the occupation of the data bus 110 is variable as a function of the length of the data transmitted, and it is controlled by means of suitable signals (Dbusy) indicating the occupation of the data bus 110 and by means of a further signal (DVal) indicating the validity of the value present in the data bus 110.

The method according to the present invention is, however, also suitable for use in other computer systems, for example those having a different number of processors, with buses (address and data, system and memory) of different capacities, with a different clock signal frequency, with a memory consisting of a different number of banks (at the limit, only one in a shared memory not controlled in interleaving mode), with an arbitration unit provided separately and not within the memory control unit, with a data bus with fully synchronous operation, and in general with any multiprocessor computer system with shared memory in which one or more of the processors is provided with a cache memory to store corresponding data of the shared memory.

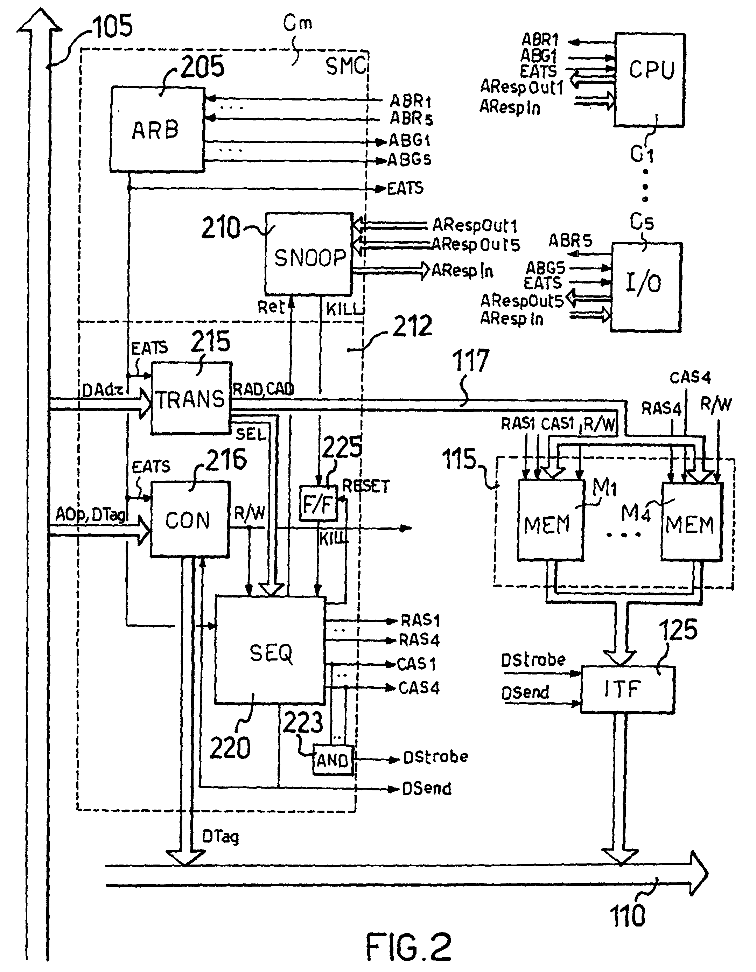

With reference now to Fig. 2 (the elements shown previously in Fig. 1 are indicated by the same reference numbers or symbols), the control unit Cm includes an arbitration logic (ARB) 205 to which each processor C1-C5 is connected through a dedicated point-to-point line for sending a signal requesting access to the address bus (Address Bus Request, or ABRᵢ, where i=C1...C5), and through a further dedicated line for receiving a signal granting access to the address bus (Address Bus Grant, or ABG₁). The granting of access to the address bus is controlled by suitable algorithms, for example of the rotation (round-robin), priority, or similar type. The arbitration logic 205 is connected through a multi-point line to all the processors C1-C5 for sending a signal indicating the validity of the value present in the address bus (Early Transfer Start, or EATS). Similar signals, not shown in the figure, exchanged with the processors C1-C5 and with a section 212 of the control unit Cm dedicated to the control of the shared memory 115, are used to control access with reciprocal exclusion to the system data bus 110.

The processors C1-C5 are also connected through dedicated channels (with a capacity of 3 bits each, for example) to a snooping logic (SNOOP) 210 for sending a signal (ARespOutᵢ) which indicates the state of the snooping and is generated by checking whether their cache memory contains a data element having an address identical to that transmitted along the address bus 105; the snooping logic 210 is connected through a multi-point channel (with a capacity of 3 bits, for example) to all the processors C1-C5, for sending a signal indicating the collective state of the snooping (ARespIn), which is a function of the value of the different ARespOutᵢ signals and of a signal Ret (described below) which indicates the state of the shared memory 115 and is generated by section 212 of the said control unit Cm. In particular, the signal ARespIn takes a first value (Retry) if the transaction has to be cancelled for any reason and then repeated by the requesting processor (for example, because the requested memory resources are not available, or because a processor is unable to check the transaction because all its resources are occupied), a second value (Modify) if a processor has in its cache memory the requested data element in a form modified with respect to the (no longer valid) value present in the shared memory, a third value (ReRun) if the transaction has to be cancelled and suspended for subsequent reactivation (to prevent continual repetitions of the transaction), and a fourth value (Null) if no processor has the requested data element in its cache memory.

The EATS signal produced by the arbitration logic 205 is also applied to a translation logic (TRANS) 215 and to a command logic (COM) 216 which receive from the address bus 105, respectively, the portion of the value ADD containing the address DAdr of the requested data element and the portion of the value ADD containing the operation type DOp and the identifying tag DTag relating to the requested data element. The translation logic 215 converts the received address DAdr into a value SEL indicating the memory bank M1-M4 to be selected and into a memory address suitable for the identification of the requested data element in the selected memory bank M1-M4. In particular, each memory location is addressable through a row address RAD (of the 12-bit type for example) and a column address CAD (of the 10-bit type for example); in the example in question, in which each requested data element consists of two consecutive words, the address DAdr is translated into a common row address RAD and into two consecutive column addresses CAD, which are sent in sequence along the memory address bus 117 to the banks M1-M4. The command logic 216 stores the identifying tag DTag and generates a signal R/W indicating the type of operation (reading or writing) to be executed at the addressed location, which is sent along a dedicated line to the memory banks M1-M4.

The signal R/W, the selection value SEL and the signal EATS are applied to the input of a command sequencing logic (SEQ) 220; the sequencing logic 220 essentially consists of a number of finite state machines equal to the number of memory banks M1-M4; it changes with each clock signal as a function of the previously received signals and is capable of keeping track of the state of the shared memory 115. The sequencing logic 220 checks, according to the value SEL and the signal R/W, whether the selected memory module M1-M4 is available for the requested operation; if it is not, the sequencing logic 220 stores the transaction in an internal queue for subsequent execution. When this internal queue (with a capacity of 8 transactions, for example) is completely full, the sequencing logic 220 sends to the snooping logic 215 the signal Ret indicating that the transaction cannot be executed.

The sequencing logic 220 is connected to each memory module M1-M4 through a dedicated line for sending a row address validation signal (Row Address Strobe) RASⱼ (where j=M1-M4), and through a further dedicated line for sending a column address validation signal (Column Address Strobe) CASⱼ; the RASⱼ and CASⱼ signals enable each memory module M1-M4 to receive from the memory address bus 117 the row address RAD and column address CAD respectively transmitted on this bus, while also intrinsically executing the function of selection of the memory bank M1-M4. The CAS_{J} signals are also applied to an AND logic 223 which essentially executes a logical AND operation between the CASⱼ signals and generates, with a predetermined delay, a signal DStrobe which indicates the validity of the value present in the memory data bus 120, and which is supplied to the interface 125.

The sequencing logic 220 is also connected to a flip-flop (F/F) 225 which is set by a signal KILL which interrupts the reading operation and is generated, as described in detail below, by the snooping logic 210 as a function of the value of the different ARespOutᵢ signals; the content of the flip-flop 225 is reset by a suitable signal generated by the said sequencing logic 220 when the reading operation is actually interrupted.

A further dedicated line is used by the sequencing logic 220 for sending to the interface unit 125 and to the command logic 216 a signal DSend which enables the transfer along the system data bus 110 of the data element received from the shared memory 115 and of the associated identifying tag respectively. In this way, the data element (stored in the interface unit 125) and the associated identifying tag (stored in the command logic 216) are sent simultaneously along the system data bus 110.

The present invention is, however, also capable of being applied to equivalent control units which use other types of signals, different connections to the other units of the computer system, and similar.

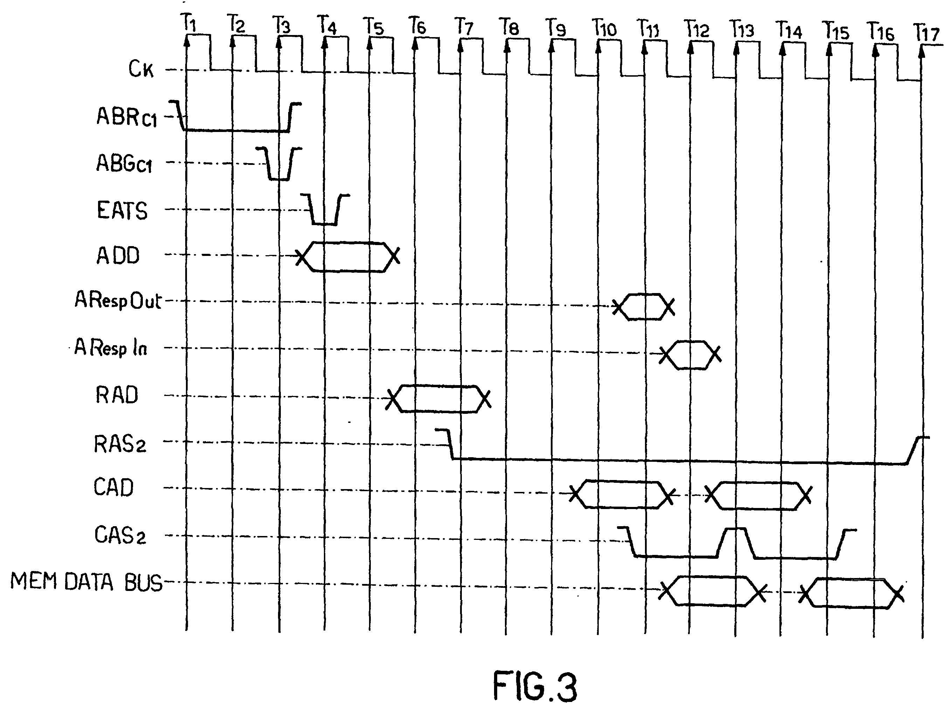

A known data reading method which can be used in the computer system described above is illustrated by the timing diagram in Fig. 3. As usual, the various signals are set/reset, in other words are switched to a low/high value (or vice versa) at the falling edges of the clock signal Ck, and each rising edge of the clock signal Ck defines the instant at which the state of the signals is stable and can be recognized (strobed); one signal (one bit) is represented by a single line, while values comprising a plurality of bits are represented by a band (the points of intersection constitute the switching instants).

It is assumed that at the instant T1 a generic processor (for example the processor indicated by C1 in Fig. 1) requests access to the address bus (by setting the signal ABR_{C1}) for reading a data element from the shared memory; the signal ABR_{C1} is kept set up to an instant, for example T3, at which the arbitration logic of the control unit grants access to the address bus (by setting the signal ABG_{C1}). The arbitration logic sets the signal EATS at the instant T4 to signal to all the processors and to the translation logic of the control unit that the value present in the address bus at the next instant is valid. Simultaneously, the processor C1 accesses the address bus by sending along it the value ADD (address of requested data element, type of operation and identifying tag) at the instants T4-T5.

The value ADD present in the address bus is received at the instant T5 by all the processors and by the control unit. At the instant T11 each processor generates a corresponding snooping state signal (represented in the figure in cumulative form by a single signal ARespOut). At the instant T12, the snooping collective state signal ARespIn is produced by the control unit (as a function of the ARespOut signals received and the signal Ret generated internally).

Assuming that the necessary memory resources for the execution of the reading operation are available (so that the signal Ret, not shown in the figure, is not set), the control unit simultaneously initiates the reading of the requested data element from the shared memory, activating a corresponding memory bank, for example the bank shown as M2 in Fig. 1. In particular, the control unit sends the row address RAD along the memory address bus (instants T6-T7); the signal R/W (not shown in the figure) is kept reset to indicate that the operation to be executed at the addressed location is a reading operation. At the instant T7 the corresponding row address validation signal RAS₂ is set. The first column address CAD is sent along the memory address bus, at the instants T10-T11 for example, and at the instant T11 the corresponding column address validation signal CAS₂ is set, so that the first word of the requested data element is read from memory bank M2 at the instants T12-T13 and simultaneously transferred along the memory data bus (MEM DATA BUS) to be received by the interface unit. At the instant T13 the signal CAS₂ is reset; simultaneously, the second column address CAD is sent along the memory address bus (instants T13-T14) and at the next instant T14 the signal CAS₂ is set again, so that the second word of the requested data element is read from the memory bank M2 at the instants T15-T16 (and simultaneously transferred along the memory data bus). The signals CAS₂ and RAS₂ are then reset at the instant T16 and at the instant T17 respectively, terminating the access to the memory bank M2.

If the snooping process finds that the requested data element is not present in modified form in the cache memory of any processor other than the requesting processor (ARespIn=Null), the data element read in this way and transferred to the interface unit is then sent along the system data bus to the requesting processor (setting the signal DStrobe, not shown in the figure). It should be noted that the operation of reading the requested data element from the shared memory is executed in each case and independently of the result of the snooping operation, as when the requested data element is present in the cache memory of an intervening processor (for example the processor indicated by C3 in Fig. 1) in modified form (ARespIn=Modify), or when the transaction has to be cancelled (ARespIn=Retry), or similar. In this case, the signal DSend is not set, and therefore the data element in the interface unit is not sent along the system data bus and is cancelled by the next data element received from the memory data bus.

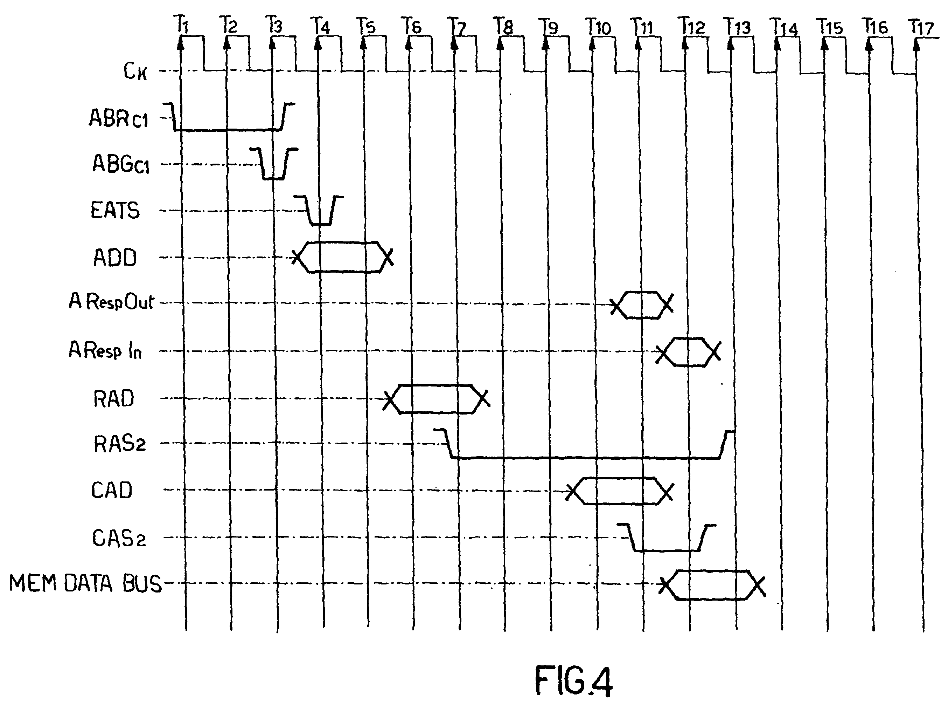

With reference now to Fig. 4, an example of a method for reading data according to the present invention is illustrated. The stages up to the completion of the snooping operation are identical to those described above; the present invention, however, is also suitable for application with equivalent timing systems capable of providing, in general, the steps of requesting the reading of a data element from the shared memory by the requesting processor, reading the requested data element from the shared memory, and, in parallel, checking whether the requested data element is present in modified form in the cache memory of each processor other than the requesting processor.

In the method according to the present invention, the reading of the requested data element from the shared memory is interrupted if it is not ascertained that the requested data element is not present in modified form in the cache memory of any processor other than the requesting processor. In the case in which, as in the example in question, the arbitration unit is provided within the control unit (which therefore receives all the ARespOutᵢ signals sent by the various processors), the operation of reading the requested data element from the shared memory is interrupted as soon (instant T11) as the control unit receives a signal ARespOutᵢ<>Null from a processor; in a different embodiment of the present invention in which the arbitration unit is provided separately, the reading operation is interrupted after the control unit has received the overall snooping signal ARespIn (with ARespIn<>Null).

In particular, the reading of the first word of the requested data element (already commenced at the instant T11) is completed by resetting the signal CAS₂ at the instant T13. Simultaneously, the sequencing logic checks the content of the flip-flop in which the signal for interruption of the reading operation is stored. In the case in question in which this flip-flop is set, the sequencing logic also resets the signal RAS₂ at the said instant T13, immediately terminating the access to the memory bank M2 (the content of the flip-flop is cancelled simultaneously). The signal DSend (not shown in the figure) is not set, and therefore the word already received from the interface unit is not sent along the system data bus and is cancelled by the next data element received from the memory data bus. Alternatively, the operation of reading the requested data element from the shared memory is interrupted before the reading of the first word (if the snooping operation is faster), or in the course of the reading of a word from the shared memory (if permitted by the components used), and similar.

The method described above reduces the duration of the reading operation. In particular, this solution obviates the complete reading of the requested data element from the shared memory when this is unnecessary, thus releasing the said memory for other operations. The example of embodiment illustrated in Fig. 4 requires, in particular, 4 clock periods less than the known method illustrated in Fig. 3; in general, the method according to the present invention provides a time saving of the order of 20% over the whole operation of reading the requested data element. In this way, the shared memory can be used immediately to access a different block operating in interleaving mode, or alternatively it is possible to access the same module after its pre-load time.

Typically, the components from which the shared memory banks are made are such that, in order to ensure their correct operation, the corresponding RASH signal is kept set for a minimum time interval (a few tens of ns, for example); therefore, in a preferred embodiment of the present invention, the reading operation is interrupted only after this minimum time interval from a start of the access to the corresponding memory bank. For example, the content of the flip-flop in which the reading operation interruption signal is stored is checked only after this time interval, or this flip-flop is set by the snooping logic with a predetermined delay, and similar.

Evidently, those skilled in the art may make numerous modifications and changes to the method for reading data described above, and all such modifications shall fall within the scope of protection of the invention as defined by the following claims.

## Claims

1. Method (T1-T13) for reading data in a computer system (100) comprising a plurality of processors (C1-C5) and a shared memory (115) including a plurality of memories banks (M1-M4), at least one of the processors (C1-C5) having a cache memory (CM1-CM5) for storing corresponding data of the shared memory (115), the method comprising the steps of:
a) requesting (T1-T5) the reading of data element from the shared memory (C1) by a requesting processor (C1), said data element including a plurality of consecutive words,
b) reading (T6-T13) the requested data element from the shared memory (115) and, in parallel, checking (T4-T12) whether the requested data element is present in modified form in the cache memory (CM1-CM5) of each processor (C1-C5) other than the requesting processor (C1), said step of reading (T6-T13) including the steps of selecting a memory bank (M2) of the shared memory (115) containing the requested data element and setting a column address validation signal (CAS2) to be sent to said memory bank (M2) for reading a first word of said plurality of consecutive words,
c) interrupting (T13) the reading of the requested data element from the shared memory (115) if the requested data element is present in modified form in the cache memory (CM3) of an intervening processor (C3) or if a processor is unable to check whether the requested data element is present in a modified form in the corresponding cache memory (CM1-CM5),
**characterised by** the fact that the plurality of memories banks (M1-M4) are controlled in an interleaving mode and said step of interrupting is performed after a step of resetting said column address validation signal (CAS₂) when the reading of the first word of the data element has been completed.

2. Method (T1-T13) according to Claim 1, in which the step of reading comprises a step of setting (T7) a row address validation signal (RAS₂) to be sent to said memory bank (M2) for reading said plurality of consecutive words.

3. Method (T1-T13) according to Claim 2, in which the step of interrupting comprises the step of resetting said row address validation signal (RAS₂) after said step of resetting the column address validation signal (CAS₂).

4. Method (T1-T13) according to Claim 1, in which the step c) includes interrupting (T13) the reading of the requested data element from the shared memory (115) only after the lapse of a specific time interval from a start (T7) of the access to the shared memory (115).

5. Method (T1-T13) according to any of Claims 1 to 4, in which the computer system (100) includes an address bus (105) to which the processors (C1-C5) are connected in parallel, the step a) comprising sending (T4-T5) along the address bus a value (ADD) indicating an address (DAdr) of the requested data element and the step (b) comprising the continuos monitoring by the processors (C1-C5) of the content of the address bus (105) to check whether a data element having the said address (DAdr) is present in the corresponding cache memory (CM1-CM5).

6. Method (T1-T13) according to any of Claims 1 to 5, in which the step c) consists in interrupting the reading of the requested data element from the shared memory (115) immediately after the reading of a word (T13).

7. Computer system (100) comprising:
- a plurality of processors (C1-C5), a shared memory (115) including a plurality of memories banks (M1-M4), at least one of the processors (C1-C5) having a cache memory (CM1-CM5) for storing corresponding data of the shared memory (115),
- snooping means (210) for checking, in parallel with the reading of a requested data element from the shared memory (115) by a requesting processor (C1), whether the requested data element is present in modified force in the cache memory (CM1-CM5) of each processor (C1), said data element including a plurality of consecutive words,
- control means (212) comprising sequencing means (220) for setting a column address validation signal (CAS₂) to be sent to a memory bank (M2) for reading a first word of said plurality of consecutive words, said control means (212) being suitable for interrupting the reading of the requested data element from the shared memory (115) if the requested data element is present in modified form in the cache memory (CM3) of an intervening processor (C3) or if a processor is unable to check whether the requested data element is present in a modified form in the corresponding cache memory (CM1-CM5),
**characterized in that** said plurality of memories banks (M1-M4) are controlled in an interleaving mode and the control means (Cm, 212) are suitable to interrupt the reading of said data element after the reading of the first word has been completed and said sequencing means (220) has reset said column address validation signal (CAS₂).

8. Computer system (100) according to Claim 7, further comprising an address bus (105) to which the processors (C1-C5) are connected in parallel for sending a value (ADD) indicating an address (DAdr) of the requested data element, each processor (C1-C5) continuously monitoring the content of the address bus (105) to check whether a data element having the said address (DAdr) is present in the corresponding cache memory (CM1-CM5).

9. Computer system (100) according to Claim 8, in which the control means (212) comprises means of translation (215) for selecting a memory bank (M2) containing the requested data element and for generating from the said address (DAdr) a row address (RAD) and at least one column address (CAD) of the selected memory bank (M2) corresponding to the requested data element, the sequencing means (220) being suitable for producing a row address validation signal (RAS₂) for the selected memory bank (M2).

## Patentansprüche

1. Verfahren (T1-T13) zum Lesen von Daten in einem Computersystem (100), das eine Mehrzahl von Prozessoren (C1-C5) und einen gemeinsam verwendeten Speicher (115), der eine Mehrzahl von Speicherbänken (M1-M4) umfaßt, aufweist, wobei zumindest einer der Prozessoren (C1-C5) einen Cache-Speicher (CM1-CM5) zum Speichern entsprechender Daten des gemeinsam verwendeten Speichers (115) aufweist, wobei das Verfahren folgende Schritte aufweist:
a) Anfordern (T1-T5) des Lesens eines Datenelements aus dem gemeinsam verwendeten Speicher (C1) durch einen anfordernden Prozessor (C1), wobei das Datenelement eine Mehrzahl aufeinanderfolgender Wörter umfaßt,
b) Lesen (T6-T13) des angeforderten Datenelements aus dem gemeinsam verwendeten Speicher (115) und, parallel dazu, Prüfen (T4-T12), ob das angeforderte Datenelement in dem Cache-Speicher (CM1-CM5) jedes Prozessors (C1-C5), der nicht der anfordernde Prozessor (C1) ist, in einer modifizierten Form vorliegt, wobei der Schritt des Lesens (T6-T13) die Schritte des Auswählens einer Speicherbank (M2) des gemeinsam verwendeten Speichers (115), die das angeforderte Datenelement enthält, und des Einstellens eines Spaltenadressenvalidierungssignals (CAS₂), das zum. Lesen eines ersten Wortes der Mehrzahl aufeinanderfolgender Wörter an die Speicherbank (M2) gesendet werden soll, umfaßt,
c) Unterbrechen (T13) des Lesens des angeforderten Datenelements aus dem gemeinsam verwendeten Speicher (115), falls das angeforderte Datenelement in dem Cache-Speicher (CM3) eines dazwischenliegenden Prozessors (C3) in einer modifizierten Form vorliegt oder falls ein Prozessor nicht in der Lage ist, zu prüfen, ob das angeforderte Datenelement in dem entsprechenden Cache-Speicher (CM1-CM5) in einer modifizierten Form vorliegt,
**gekennzeichnet durch** die Tatsache, daß die Mehrzahl von Speicherbänken (M1-M4) in einem Verschachtelungsmodus gesteuert wird und der Schritt des Unterbrechens nach einem Schritt des Zurücksetzens des Spaltenadressenvalidierungssignals (CAS₂) durchgeführt wird, wenn das Lesen des ersten Wortes des Datenelements abgeschlossen wurde.

2. Verfahren (T1-T13) gemäß Anspruch 1, bei dem der Schritt des Lesens einen Schritt des Einstellens (T7) eines Reihenadressenvalidierungssignals (RAS₂), das zum Lesen der Mehrzahl aufeinanderfolgender Wörter an die Speicherbank (M2) gesendet werden soll, aufweist.

3. Verfahren (T1-T13) gemäß Anspruch 2, bei dem der Schritt des Unterbrechens den Schritt des Zurücksetzens des Reihenadressenvalidierungssignals (RAS₂) nach dem Schritt des Zurücksetzens des Spaltenadressenvalidierungssignals (CAS₂) aufweist.

4. Verfahren (T1-T13) gemäß Anspruch 1, bei dem der Schritt c) das Unterbrechen (T13) des Lesens des angeforderten Datenelements aus dem gemeinsam verwendeten Speicher (115) lediglich nach dem Ablauf eines bestimmten Zeitintervalls ab einem Start (T7) des Zugriffs auf den gemeinsam verwendeten Speicher (115) umfaßt.

5. Verfahren (T1-T13) gemäß einem der Ansprüche 1 bis 4, bei dem das Computersystem (100) einen Adreßbus (105) umfaßt, mit dem die Prozessoren (C1-C5) parallel verbunden sind, wobei der Schritt a) das Senden (T4-T5) eines Wertes (ADD), der eine Adresse (DAdr) des angeforderten Datenelements angibt, entlang des Adreßbusses aufweist und der Schritt b) das kontinuierliche Überwachen des Inhalts des Adreßbusses (105) durch die Prozessoren (C1-C5), um zu prüfen, ob ein die Adresse (DAdr) aufweisendes Datenelement in den entsprechenden Cache-Speicher (CM1-CM5) vorliegt, aufweist.

6. Verfahren (T1-T13) gemäß einem der Ansprüche 1 bis 5, bei dem der Schritt c) aus dem Unterbrechen des Lesens des angeforderten Datenelements aus dem gemeinsam verwendeten Speicher (115) unmittelbar nach dem Lesen eines Wortes (T13) besteht.

7. Computersystem (100), das folgende Merkmale aufweist:
eine Mehrzahl von Prozessoren (C1-C5), einen gemeinsam verwendeten Speicher (115), der eine Mehrzahl von Speicherbänken (M1-M4) umfaßt, wobei zumindest einer der Prozessoren (C1-C5) einen Cache-Speicher (CM1-CM5) zum Speichern entsprechender Daten des gemeinsam verwendeten Speichers (115) aufweist,
eine Nachprüfeinrichtung (210) zum Prüfen, parallel zum Lesen eines angeforderten Datenelements aus dem gemeinsam verwendeten Speicher (115) durch einen anfordernden Prozessor (C1), ob das angeforderte Datenelement in dem Cache-Speicher (CM1-CM5) jedes Prozessors (C1) in einer modifizierten Form vorliegt, wobei das Datenelement eine Mehrzahl aufeinanderfolgender Wörter umfaßt,
eine Steuereinrichtung (212), die eine Sequenzierungseinrichtung (220) zum Einstellen eines Spaltenadressenvalidierungssignals (CAS₂), das zum Lesen eines ersten Wortes der Mehrzahl aufeinanderfolgender Wörter an eine Speicherbank (M2) gesendet werden soll, aufweist, wobei die Steuereinrichtung (212) zum Unterbrechen des Lesens des angeforderten Datenelements aus dem gemeinsam verwendeten Speicher (115), falls das angeforderte Datenelement in dem Cache-Speicher (CM3) eines dazwischenliegenden Prozessors (C3) in einer modifizierten Form vorliegt, oder falls ein Prozessor nicht in der Lage ist, zu prüfen, ob das angeforderte Datenelement in dem entsprechenden Cache-Speicher (CM1-CM5) in einer modifizierten Form vorliegt, geeignet ist,
**dadurch gekennzeichnet, daß** die Mehrzahl von Speicherbänken (M1-M4) in einem Verschachtelungsmodus gesteuert ist und die Steuereinrichtungen (Cm, 212) geeignet sind, das Lesen des Datenelements zu unterbrechen, nachdem das Lesen des ersten Wortes abgeschlossen wurde und die Sequenzierungseinrichtung (220) das Spaltenadressenvalidierungssignal (CAS₂) zurückgesetzt hat.

8. Computersystem (100) gemäß Anspruch 7, das ferner einen Adreßbus (105) aufweist, mit dem die Prozessoren (C1-C5) parallel verbunden sind, um einen Wert zu senden (ADD), der eine Adresse (DAdr) des angeforderten Datenelements angibt, zu senden, wobei jeder Prozessor (C1-C5) den Inhalt des Adreßbusses (105) kontinuierlich überwacht, um zu prüfen, ob in dem entsprechenden Cache-Speicher (CM1-CM5) ein Datenelement vorliegt, das die Adresse (DAdr) aufweist.

9. Computersystem (100) gemäß Anspruch 8, bei dem die Steuereinrichtung (212) eine Übersetzungseinrichtung (215) zum Auswählen einer Speicherbank (M2) aufweist, die das angeforderte Datenelement enthält, und zum Erstellen, ausgehend von der Adresse (DAdr), einer Reihenadresse (RAD) und zumindest einer Spaltenadresse (CAD) der ausgewählten Speicherbank (M2), die dem angeforderten Datenelement entspricht, wobei die Sequenzierungseinrichtung (220) zum Erzeugen eines Reihenadressenvalidierungssignals (RAS₂) für die ausgewählte Speicherbank (M2) geeignet ist.

## Revendications

1. Procédé (T1-T13) de lecture de données dans un système d'ordinateur (100) comprenant une pluralité de processeurs (C1-C5) et une mémoire partagée (115) comprenant une pluralité de bancs mémoire (M1-M4), au moins l'un des processeurs (C1-C5) comprenant une mémoire cache (CM1-CM5) pour stocker les données correspondantes de la mémoire partagée (115), le procédé comprenant les étapes suivantes :
a) demande (T1-T5) de lecture de l'élément de données dans la mémoire partagée (C1) par un processeur demandeur (C1), ledit élément de données comprenant une pluralité de mots consécutifs,
b) lecture (T6-T13) de l'élément de données demandé dans la mémoire partagée (115) et, en parallèle, contrôle (T4-T12) que l'élément de données demandé est présent sous forme modifiée dans la mémoire cache (CM1-CM5) de chaque processeur (C1-C5) autre que le processeur demandeur (C1), ladite étape de lecture (T6-T13) comprenant les étapes de sélection d'un banc mémoire (M2) de la mémoire partagée (115) contenant l'élément de données demandé et définissant un signal de validation d'adresse de colonne (CAS2) à envoyer audit banc mémoire (M2) pour lecture d'un premier mot de ladite pluralité de mots consécutifs,
c) interruption (T13) de la lecture de l'élément de données demandé dans la mémoire partagée (115) si l'élément de données demandé est présent sous forme modifiée dans la mémoire cache (CM3) d'un processeur intervenant (C3) ou si un processeur est incapable de contrôler que l'élément de données demandé est présent sous forme modifiée dans la mémoire cache correspondante (CM1-CM5),
**caractérisé par le fait que** la pluralité de bancs mémoire (M1-M4) est contrôlé dans un mode imbriqué et que ladite étape d'interruption est exécutée après une étape de réinitialisation dudit signal de validation d'adresse de colonne (CAS₂), quand la lecture du premier mot de l'élément de données est achevée.

2. Procédé (T1-T13) selon la Revendication 1, dans lequel l'étape de lecture comprend une étape de définition (T7) d'un signal de validation d'adresse de rangée (RAS₂) à envoyer audit banc mémoire (M2) pour lire ladite pluralité de mots consécutifs.

3. Procédé (T1-T13) selon la Revendication 2, dans lequel l'étape d'interruption comprend l'étape de réinitialisation dudit signal de validation d'adresse de rangée (RAS₂) après l'étape de réinitialisation du signal de validation d'adresse de colonne (CAS₂).

4. Procédé (T1-T13) selon la Revendication 1, dans lequel l'étape c) comprend l'interruption (T13) de la lecture de l'élément de données demandé dans la mémoire partagée (115) uniquement après un intervalle de temps spécifique à partir du début (T7) de l'accès à la mémoire partagée (115).

5. Procédé (T1-T13) selon l'une des revendications 1 à 4, dans lequel le système d'ordinateur (100) comprend un bus d'adresse (105) auquel les processeurs (C1-C5) sont connectés en parallèle, l'étape a) comprenant l'envoi (T4-T5) le long du bus d'adresse d'une valeur (ADD) indiquant une adresse (DAdr) de l'élément de données demandé et l'étape b) comprenant la surveillance constante par le processeur (C1-C5) du contenu du bus d'adresse (105) pour contrôler qu'un élément de données contenant ladite adresse (DAdr) est présent dans la mémoire cache correspondante (CM1-CM5).

6. Procédé (T1-T13) selon l'une des revendications 1 à 5, dans lequel l'étape c) consiste à interrompre la lecture de l'élément de données demandé dans la mémoire partagée (115) immédiatement après la lecture d'un mot (T13).

7. Système d'ordinateur (100) comprenant :
- une pluralité de processeurs (C1-C5), une mémoire partagée (115) comprenant une pluralité de bancs mémoire (M1-M4), au moins l'un des processeurs (C1-C5) comprenant une mémoire cache (CM1-CM5) pour stocker les données correspondantes de la mémoire partagée (115).
- des moyens de surveillance de trafic (210) pour contrôler, en parallèle avec la lecture d'un élément de données demandé dans la mémoire partagée (115) par un processeur demandeur (C1), que l'élément de données demandé est présent sous forme modifiée dans la mémoire cache (CM1-CM5) de chaque processeur (C1), ledit élément de données comprenant une pluralité de mots consécutifs,
- un moyen de contrôle (212) comprenant des moyens de séquencement (220) pour définir un signal de validation d'adresse de colonne (CAS₂) à envoyer à un banc mémoire (M2) pour lire un premier mot de ladite pluralité de mots consécutifs, ledit moyen de contrôle (212) étant adapté à l'interruption de la lecture de l'élément de données demandé dans la mémoire partagée (115) si l'élément de données demandé est présent sous forme modifiée dans la mémoire cache (CM3) d'un processeur intervenant (C3) ou si un processeur est incapable de contrôler que l'élément de données demandé est présent sous forme modifiée dans la mémoire cache correspondante (CM1-CM5),
**caractérisé en ce que** ladite pluralité de bancs mémoire (M1-M4) est contrôlée dans un mode imbriqué et que les moyens de contrôle (Cm, 212) sont adaptés à l'interruption de la lecture dudit élément de données après la lecture du premier mot et que ledit moyen de séquencement (220) a réinitialisé ledit signal de validation d'adresse de colonne (CAS₂).

8. Système d'ordinateur (100) selon la Revendication 7, comprenant de plus un bus d'adresse (105) auquel sont connectés les processeurs (C1-C5) en parallèle pour envoyer une valeur (ADD) indiquant une adresse (DAdr) de l'élément de données demandé, chaque processeur (C1-C5) surveillant constamment le contenu f du bus d'adresse (105) pour contrôler qu'un élément de données ayant ladite adresse (DAdr) est présent dans la mémoire cache correspondante (CM1-CM5).

9. Système d'ordinateur (100) selon la Revendication 8, dans lequel le moyen de contrôle (212) comprend des moyens de conversion (215) pour sélectionner un banc mémoire (M2) contenant l'élément de données demandé et pour générer à partir de ladite adresse (DAdr) une adresse de rangée (RAD) et au moins une adresse de colonne (CAD) du banc mémoire sélectionné (M2) correspondant à l'élément de données demandé, le moyen de séquencement (220) étant adapté à la production d'un signal de validation d'adresse de rangée (RAS₂) pour le banc mémoire sélectionné (M2).
